(19) Europäisches Patentamt
European Patent Office
Office européen des brevets

(11) **EP 4 641 043 B1**

(12) **FASCICULE DE BREVET EUROPEEN**

(45) Date de publication et mention
de la délivrance du brevet:
**15.04.2026 Bulletin 2026/16**

(21) Numéro de dépôt: **25166488.4**

(22) Date de dépôt: **26.03.2025**

(51) Classification Internationale des Brevets (IPC):
***F16D 65/18*** *(2006.01)*

(52) Classification Coopérative des Brevets (CPC):
**F16D 65/18; F16H 25/2228;** F16D 2121/24;
F16D 2125/06; F16D 2125/40

(54) **PISTON D'UN MÉCANISME D'ACTIONNEUR, COMPORTANT UN ÉCROU ET UNE DOUILLE**

KOLBEN EINES BETÄTIGUNGSMECHANISMUS MIT EINER MUTTER UND EINER HÜLSE

PISTON OF AN ACTUATOR MECHANISM, COMPRISING A NUT AND A SLEEVE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **25.04.2024 FR 2404264**

(43) Date de publication de la demande:
**29.10.2025 Bulletin 2025/44**

(73) Titulaire: **NTN Europe
74000 Annecy (FR)**

(72) Inventeur: **BERTHIER, Julien
74410 JORIOZ (FR)**

(74) Mandataire: **Alatis
3, rue Paul Escudier
75009 Paris (FR)**

(56) Documents cités:
**EP-B1- 2 787 248     FR-A1- 2 753 672**

## Description

### DOMAINE TECHNIQUE DE L'INVENTION

L'invention se rapporte au domaine des actionneurs, notamment pour l'industrie du transport, notamment automobile ou aéronautique, notamment aux pistons dans des mécanismes entraînés par une vis sans fin, en particulier une vis à billes et plus particulièrement, bien que de façon non exclusive, aux pistons de plaquette de frein dans des mécanismes de freinage entraînés par une vis sans fin, en particulier une vis à billes.

### ÉTAT DE LA TECHNIQUE ANTÉRIEURE

Dans la demande de brevet français non publiée à la date de dépôt de la présente demande, portant le numéro de dépôt FR 2402914, est divulgué un mécanisme d'actionneur de frein comportant une vis, un écrou fretté dans une douille et des billes positionnées entre un filetage hélicoïdal de la vis et un filetage hélicoïdal de l'écrou, l'écrou et la douille formant un piston coulissant dans un cylindre de guidage. Le piston formé par l'écrou et la douille nécessite une maîtrise particulièrement poussée des cotes lors de la fabrication, afin que le frettage soit efficace, sans déformation d'un des éléments du piston lors de l'assemblage de la douille sur l'écrou. En effet, il est nécessaire pour l'application que les tolérances dimensionnelles du piston soient très étroites, afin de réaliser un coulissement quasiment sans jeu et sans frottement du piston dans le cylindre.

Les documents EP 2 787 248 B1 et FR 2 753 672 A1 peuvent être de même cités comme art antérieur.

### EXPOSÉ DE L'INVENTION

L'invention vise à remédier aux inconvénients de l'état de la technique et à proposer une solution simple pour réaliser un piston respectant des tolérances dimensionnelles serrées.

Pour ce faire est proposé, selon un premier aspect de l'invention, un piston d'un mécanisme d'actionneur, le piston comportant un écrou de mécanisme de vis sans fin, définissant un axe de référence, une paroi périphérique extérieure et un filet d'écrou destiné à coopérer, directement ou par l'intermédiaire de billes, avec une vis de mécanisme de vis sans fin ; une douille solidaire de l'écrou et recouvrant au moins partiellement la paroi périphérique extérieure de l'écrou, la douille comprenant une zone de guidage cylindrique destinée à venir en contact glissant ajusté avec une paroi de guidage intérieure d'un cylindre de guidage du mécanisme d'actionneur ; remarquable en ce que l'écrou comprend au moins une portée annulaire de frettage, la douille comprend au moins une zone de frettage frettée sur la portée annulaire de frettage, la zone de guidage présentant un diamètre extérieur supérieur à celui de la zone de frettage et recouvrant sans contact ou sans frettage une portion recouverte de la paroi périphérique extérieure de l'écrou.

La douille comprenant une zone frettée à l'écrou permet la cohésion de l'ensemble formé correspondant au piston. Cette zone peut se déformer librement lors du frettage, sans dépasser du gabarit extérieur défini par le diamètre extérieur de la zone de guidage. La zone de guidage de la douille, quant à elle, ne subit pas de déformation lors du montage sur l'écrou, ce qui permet de garantir son dimensionnement. On obtient ainsi un piston qui ne nécessite pas, après montage de la douille sur l'écrou, une rectification de la zone de guidage de la douille, ce qui permet de diminuer les coûts liés à ce procédé de rectification. L'absence de rectification après montage permet en outre de prévoir, avant montage sur l'écrou, un traitement thermochimique de surface de la zone de guidage de la douille, pour lui conférer des caractéristiques mécaniques spécifiques, qui disparaîtraient si la zone de guidage devait subir une rectification. Dans l'hypothèse d'une douille réalisée en un matériau différant de l'écrou, les effets des dilatations thermiques différentielles entre douille et écrou consécutives aux fluctuations de température sont cantonnés à la zone de frettage de la douille, et sans incidence notable sur la zone de guidage.

Selon un mode de réalisation, la zone de guidage et la portion recouverte de la paroi périphérique extérieure de l'écrou sont séparées par un espace annulaire intermédiaire généré par :

-   un renfoncement annulaire de la portion recouverte de la paroi périphérique extérieure de l'écrou par rapport à la portée annulaire de frettage ; et /ou
-   un diamètre intérieur de la zone de guidage supérieur à un diamètre intérieur la zone de frettage.

Selon un mode de réalisation, l'espace annulaire intermédiaire présente une longueur L1 mesurée parallèlement à l'axe de référence, et une profondeur P, mesurée radialement entre la paroi périphérique extérieure de l'écrou et une face intérieure cylindrique de la zone de guidage de la douille, et l'écrou présente une longueur d'écrou L2 mesurée dans un axe parallèle à l'axe de référence entre deux extrémités de l'écrou, telles que

-

$$L1 > 20P \; ;$$

et/ou

-

$$L2/2 < L1 < L2.$$

L'espace annulaire intermédiaire ne présente donc pas une dimension radiale élevée, l'espace entre la douille et l'écrou n'étant pas nécessairement élevé, mais présente un volume annulaire non négligeable grâce à sa dimension axiale. Cela permet de créer un espace annulaire intermédiaire conséquent et uniforme sur une partie de l'écrou ou de la douille le long duquel aucun effort de frettage ne vient se répercuter, afin de répondre au besoin de maintien des dimensions radiales extérieures de la douille.

Suivant un mode de réalisation, l'écrou comprend une deuxième portée annulaire de frettage, et la douille comprend une deuxième zone de frettage en contact avec la deuxième portée annulaire de frettage de l'écrou. De préférence, les deux zones annulaires de frettage sont distantes l'une de l'autre axialement, par exemple situées à deux extrémités axiales opposées de la zone de guidage. De cette manière, la douille est frettée sur deux extrémités de l'écrou, ce qui lui confère une liaison stable et fiable, tout en ayant une zone intermédiaire non frettée à l'écrou lui permettant de maintenir ses dimensions radiales recherchées. De préférence, on ne prévoit pas plus de deux zones de frettage.

Selon un mode de réalisation, la douille présente un épaulement de fin de course de frettage tourné dans un sens axial d'assemblage, en appui contre une face annulaire d'extrémité de l'écrou, ce qui permet une butée de l'écrou contre la douille, permettant le bon positionnement axial de la douille sur l'écrou et la correspondance des zones de frettage sur les portées annulaires de frettage.

Selon un mode de réalisation, l'écrou comprend une mortaise de sertissage et la douille présente un rabat de matière de sertissage pénétrant dans la mortaise de sertissage en appui contre un épaulement de sertissage de la mortaise de sertissage, ce qui permet de verrouiller la liaison entre la douille et l'écrou, et ainsi de diminuer le risque de micromouvements de la douille contre la surface de l'écrou, ces mouvements pouvant induire une usure des zones frettées par corrosion de frottement.

De préférence l'écrou comprend une mortaise de blocage et la douille présente une fente de blocage ouverte sur la mortaise de blocage, le piston comportant en outre un coulisseau inséré dans la mortaise de blocage et en saillie radiale par rapport à la zone de guidage. Cette mortaise a vocation à être insérée dans une cannelure de guidage du cylindre de logement du piston, pour prévenir toute rotation du piston dans le cylindre autour de l'axe de référence, tout en autorisant les mouvements de translation. Par ailleurs, le coulisseau est un moyen de liaison supplémentaire entre la douille et l'écrou, permettant de diminuer les risques liés à d'éventuels mouvements de la douille sur l'écrou.

Selon un mode de réalisation, la douille comprend une couche de surface de résistance à l'abrasion et à la corrosion, riche en azote, et l'écrou comprend une zone de surface durcie riche en carbone au moins localement au niveau du filet d'écrou. Ainsi, la douille est plus résistante à l'usure de contact engendré par les frottements contre le cylindre de guidage lorsque le piston est en fonctionnement dans le cylindre de guidage, ce qui permet à la douille, et donc au piston, d'être plus résistante et durable.

Selon un mode de réalisation, le piston présente un fond de piston réalisé par la douille ou l'écrou. Le fond de piston a vocation à venir en appui sur un patin de frein pour l'actionner. Il peut avantageusement être couvert extérieurement par un revêtement de surface, une couche de zinc lamellaire par exemple.

Selon un autre aspect de l'invention, un mécanisme d'actionneur de frein, comportant :

- un cylindre de guidage ;

- un mécanisme de vis à billes, comportant une vis et un écrou définissant un axe de référence du mécanisme d'actionneur de frein, et des billes, la vis présentant au moins un filet de vis formant un chemin de roulement pour les billes, l'écrou présentant un filet d'écrou formant un chemin de roulement hélicoïdal extérieur pour les billes et une paroi périphérique extérieure ; et

- une douille solidaire de l'écrou et recouvrant au moins partiellement la paroi périphérique extérieure de l'écrou, la douille venant en contact glissant ajusté avec une paroi de guidage intérieure du cylindre de guidage, la douille et l'écrou constituant un piston tel que décrit précédemment.

Le piston présente de préférence un fond, comme évoqué précédemment, réalisé par la douille ou l'écrou, et ayant vocation à venir en appui sur un patin ou plus généralement un organe de frein pour l'actionner.

## BRÈVE DESCRIPTION DES FIGURES

D'autres caractéristiques et avantages de l'invention ressortiront à la lecture de la description qui suit, en référence aux figures annexées, qui illustrent :

- [Fig. 1] : une vue en coupe axiale d'un mécanisme d'actionneur de frein comprenant un mécanisme de vis à billes comportant une vis, un écrou et une douille selon un premier mode de réalisation dans lequel l'écrou présente un renfoncement annulaire.

- [Fig. 2] : une vue en coupe axiale du mécanisme de vis à billes selon le mode de réalisation de la figure 1.

- [Fig. 3] : une vue en coupe détaillée sur une première zone de frettage de l'écrou selon le mode de réalisation de la figure 1.

- [Fig. 4] : une vue en coupe détaillée sur une deuxième zone de frettage de l'écrou selon le mode de réalisation de la figure 1.

- [Fig. 5] : une vue en coupe détaillée sur une partie de l'écrou comprenant une mortaise selon le mode de réalisation de la figure 1.

- [Fig. 6] : une vue en coupe détaillée sur une première zone de frettage de l'écrou selon un deuxième mode de réalisation dans lequel la douille présente un renfoncement annulaire secondaire.

- [Fig. 7] : une vue en coupe détaillée sur une deuxième zone de frettage de l'écrou selon le mode de réalisation de la figure 6.

- [Fig. 8] : une vue en coupe axiale du mécanisme de vis à bille selon un troisième mode de réalisation dans lequel la douille présente un fond.

Pour plus de clarté, les éléments identiques ou similaires sont repérés par des signes de référence identiques sur l'ensemble des figures.

## DESCRIPTION DÉTAILLÉE DE MODES DE RÉALISATION

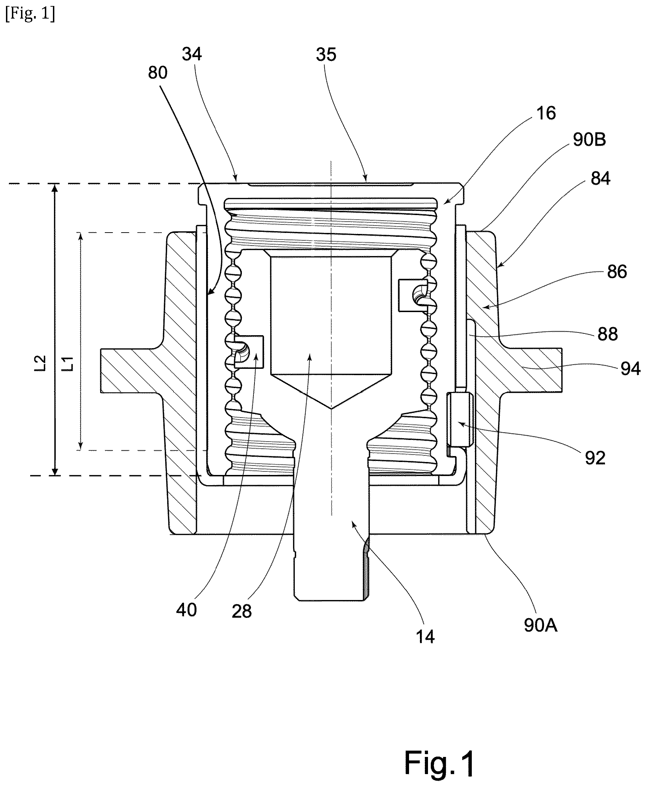

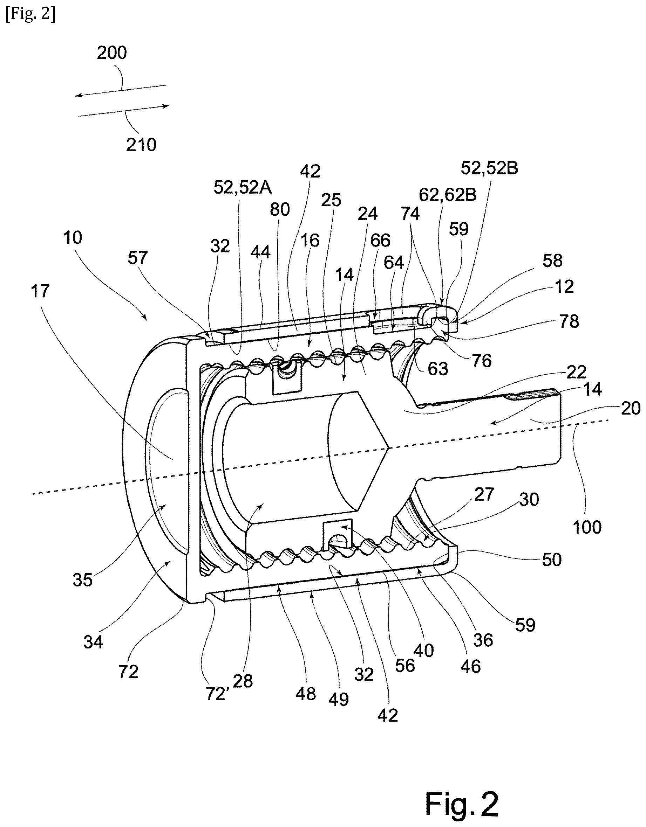

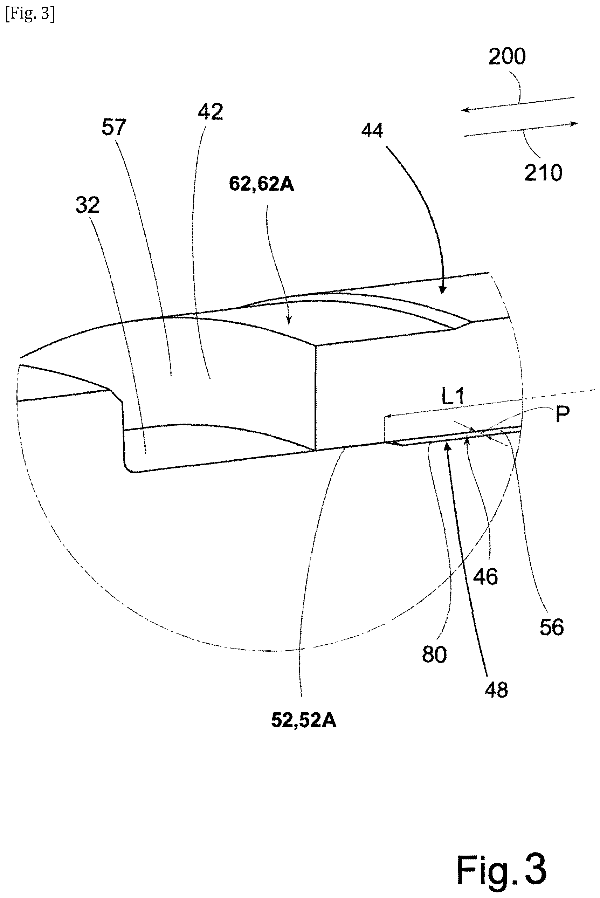

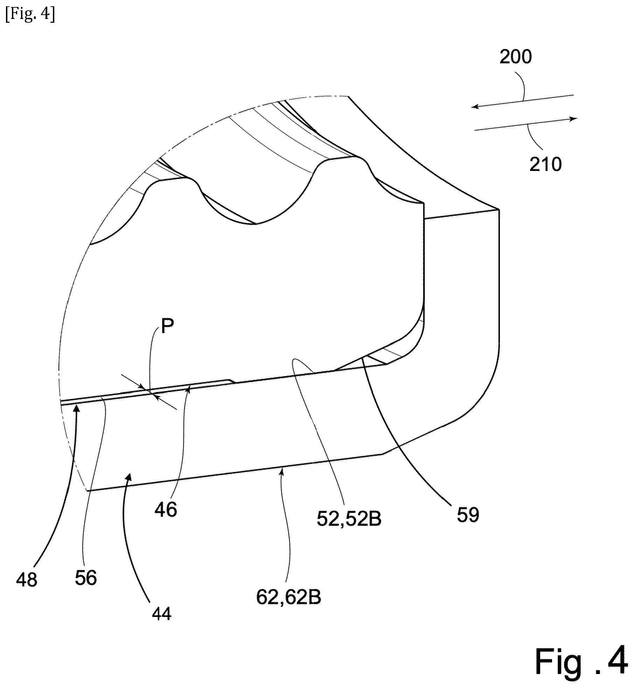

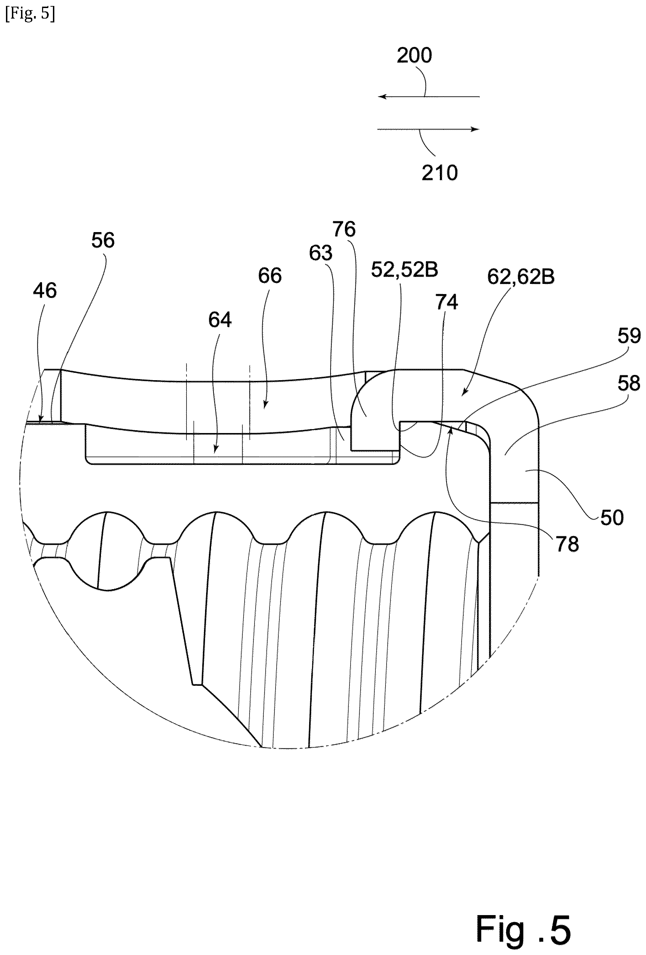

Sur les figures 1 à 5 est illustré un premier mode de réalisation d'un mécanisme d'actionneur de frein **10** comportant un cylindre de guidage **84** fixe et un piston **12** coulissant en translation dans le cylindre de guidage **84** le long d'un axe de référence **100,** qui est également un axe de référence du piston, pour venir en appui direct ou indirect contre une plaquette de frein (non représenté). Le piston **12** comprend une douille **42** et un écrou **16,** l'écrou **16** faisant partie d'un mécanisme de vis à billes comportant deux composants filetés, à savoir une vis **14** et l'écrou **16,** et des billes.

Le cylindre de guidage **84** est constitué d'une base métallique, par exemple en acier, et comprend un corps de guidage **86** cylindrique, de préférence à base circulaire, centré sur l'axe de référence **100**. Le corps de guidage **86** comprend une cannelure de blocage 88 longitudinale, s'étendant depuis une première extrémité annulaire ouverte **90A** vers une deuxième extrémité annulaire ouverte **90B,** sur une distance prédéterminée. La cannelure de blocage **88** est configurée pour accueillir un coulisseau **92** en contact glissant, afin de bloquer le piston **12** en rotation par rapport au cylindre de guidage **84,** tout en lui permettant un mouvement de translation dans le cylindre de guidage **84**. En outre, le corps de guidage **86** peut comprendre un flasque de positionnement **94**.

La vis **14** est de préférence métallique, par exemple en acier tel qu'un acier 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents, et peut comprendre une tête de vis **20** et un corps de vis **24,** le cas échéant reliés par une portion de liaison **22**. Le corps de vis **24** peut présenter un diamètre supérieur à la tête de vis **20**. La tête de vis **20** est conformée pour être solidarisée en rotation à un arbre de sortie d'un moteur électrique ou d'un motoréducteur, et peut présenter, par exemple une interface non circulaire, par exemple à quatre, six ou huit pans.

Le corps de vis **24** présente un filet de vis **25** qui forme un chemin de roulement hélicoïdal intérieur autour de l'axe de référence **100** du mécanisme de vis à billes, le chemin de roulement hélicoïdal intérieur étant tourné radialement à l'opposé de l'axe de référence **100**. En outre, la vis **14** présente une cavité centrale ouverte **28** permettant d'alléger l'ensemble du mécanisme d'actionneur de frein **10**.

L'écrou **16** est réalisé en acier, par exemple un acier 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents. L'écrou **16** présente globalement une forme cylindrique dont l'axe central est l'axe de référence **100**. L'écrou **16** présente un filet d'écrou **27** qui forme un chemin de roulement hélicoïdal extérieur **30** autour de l'axe de référence **100,** et tourné radialement vers l'axe de référence **100**.

L'écrou **16** est du type fermé au sens où il présente un fond d'écrou **17,** réalisé par une face de fermeture extérieure **34,** et réalisant un fond de piston. L'écrou **16** présente une face périphérique extérieure **32** globalement cylindrique s'étendant de la face de fermeture extérieure **34** à une face annulaire d'extrémité **36,** sur une longueur L2. La face périphérique extérieure **32** présente une mortaise de sertissage **63,** une mortaise de blocage **64** et une portion recouverte **80**. La mortaise de sertissage **63** présente un épaulement de sertissage **74,** tourné dans un sens axial d'assemblage **210**. La portion recouverte **80** présente un renfoncement annulaire **46** radialement vers l'intérieur. La mortaise de sertissage **63** et la mortaise de blocage **64** peuvent être confondues. Le renfoncement annulaire **46** s'étend sur une longueur L1 parallèle à l'axe de référence **100** et présente une profondeur P mesurée radialement entre un fond du renfoncement annulaire **46** et une face intérieure cylindrique **48** au niveau d'une zone de guidage **44** de la douille **42** décrite par la suite. La longueur L1 est supérieure à la profondeur P telle que $L1 > 20P$, et L2 est supérieure à la longueur L1 telle que $\frac{L2}{2} < L1 < L2$. Le renfoncement annulaire **46** peut être obtenu lors d'un moulage de l'écrou **16** ou par usinage par exemple.

En outre, la face périphérique extérieure **32** de l'écrou **16** comprend deux portées annulaires de frettage **52** distinctes, disposées de part et d'autre du renfoncement annulaire **46**. Les deux portées annulaires de frettage **52** débouchent axialement sur le renfoncement annulaire **46**. Parmi les deux portées annulaires de frettage **52,** une première portée annulaire de frettage **52A** est disposée au voisinage de la face de fermeture extérieure **34** tandis qu'une deuxième portée annulaire de frettage **52B** est disposée à proximité de la face annulaire d'extrémité **36**. La deuxième portée annulaire de frettage **52B** est liée à la face annulaire d'extrémité **36** par l'intermédiaire d'un chanfrein **59**. Les deux portées annulaires de frettage **52** sont configurées pour accueillir en contact serré la douille **42**.

De plus, la face de fermeture extérieure **34** peut présenter un évidement **35**, le fond de l'écrou **16** étant configuré pour entrer en contact direct ou indirect avec la plaquette de frein (non représenté sur les figures). La face de fermeture extérieure **34** présente en outre une collerette **72**, saillante radialement de la paroi périphérique extérieure **32,** qui forme un épaulement de collerette **72'**. La collerette **72** permet en outre de limiter les éventuelles déformations de la face de fermeture extérieure **34** sous les contraintes mécaniques lors de l'activation du mécanisme d'actionneur de frein **10** par exemple.

L'un des deux composants filetés, à savoir la vis **14** ou l'écrou **16,** peut en outre être équipé de moyens de recirculation **40** des billes, qui peuvent comporter un ou plusieurs recirculateurs traversant chacun un ou plusieurs filets du composant fileté, comme illustré sur la figure 1, ou des paires de recirculateurs disposés aux extrémités d'un canal de recirculation qui enjambe une ou plusieurs spires des chemins de roulement de la vis **14** et de l'écrou **16**. Dans ce mode de réalisation, la recirculation des billes est interne, c'est-à-dire comprenant au moins un recirculateur traversant chacun un filet de la vis **14**.

Les billes peuvent être par exemple réalisées en acier ou en céramique, et sont dimensionnées et positionnées pour circuler en circuit fermé entre le chemin de roulement hélicoïdal extérieur **30** de l'écrou **16** et le chemin de roulement hélicoïdal intérieur **25** de la vis **14**, ainsi, le cas échéant, que par les moyens de recirculation **40,** de préférence sans séparateurs entre les billes.

La douille **42** est métallique, par exemple en acier, par exemple l'acier 20MnCr5, 23MnB4, Scr420, 16MnCr5 ou leurs équivalents suivant les autres normes internationales ou nationales, ou de l'acier à haut taux de carbone tel que l'acier 100Cr6, C50 ou C56 ou leurs équivalents. La douille **42** présente une face intérieure cylindrique **48** et une face extérieure cylindrique **49** opposées radialement, et s'étendant d'une première extrémité **57** de la douille **42** à une deuxième extrémité **58** de la douille **42**. La douille **42** présente une fente de blocage **66**, tel un trou traversant, globalement rectangulaire ou oblong, située à proximité de la face annulaire d'extrémité **36** de l'écrou **16**. La fente de blocage 66 donne accès à la mortaise de blocage **64** de l'écrou **16**.

La douille **42** présente un rabat de matière de sertissage **76** vers l'intérieur, destiné à s'épauler sur la mortaise de sertissage **63,** au niveau de l'épaulement de sertissage **74** de la mortaise de sertissage **63**. De plus, la douille **42** peut optionnellement présenter un épaulement **50** de douille **42** situé à la deuxième extrémité **58** de la douille **42,** tourné dans un sens axial d'assemblage **210.** L'épaulement **50** de douille **42** repose axialement sur la face annulaire d'extrémité **36** de l'écrou **16,** opposée au fond **17** de l'écrou **16**. Le rabat de matière de sertissage **76** et l'épaulement **50** de douille **42** présentent des faces d'appui globalement parallèles et, joints par la face intérieure cylindrique **48** de la douille **42,** forment une gorge de sertissage **78**. La gorge de sertissage **78** est configurée pour accueillir en contact serré une partie au moins de l'écrou **16**.

En outre, la douille **42** présente une zone de guidage **44** et deux zones de frettage **62**, à savoir une première zone de frettage **62A** située au voisinage de la première extrémité **57** de la douille **42** et une deuxième zone de frettage **62B** située au voisinage de la deuxième extrémité **58** de la douille **42**. La zone de guidage **44** est destinée, par l'intermédiaire de la face extérieure cylindrique **49**, à venir en contact glissant ajusté avec la paroi de guidage intérieure du cylindre de guidage **84**. La zone de guidage **44** est destinée, par l'intermédiaire de la face intérieure cylindrique **48**, à recouvrir sans frettage, et de préférence sans contact, la portion recouverte **80** de l'écrou **16**. Chaque zone de frettage **62** est destinée à venir en contact serré avec la face périphérique extérieure **32** de l'écrou **16** au niveau des deux portées annulaires de frettage **52**. La zone de guidage **44** et les deux zones de frettage **62** sont le cas échéant jointes par des chanfreins permettant de faciliter l'insertion du piston **12** dans le cylindre de guidage **84**.

Plus particulièrement, la première zone de frettage **62A** est destiné à venir en contact serré avec la première portée annulaire de frettage **52A** tandis que, la deuxième zone de frettage **62B** est destinée à venir en contact serré avec la deuxième portée annulaire de frettage **52B**. La zone de guidage **44** présente un diamètre extérieur supérieur au diamètre extérieur de la première zone de frettage **62A** afin de limiter les éventuelles déformations liées aux procédés d'assemblage de la douille **42** sur l'écrou **16** dans un diamètre inférieur ou égal au diamètre de la zone de guidage **44**. La zone de guidage **44** présente un diamètre extérieur supérieur ou égal diamètre extérieur de la deuxième zone de frettage **62B** puisque la deuxième zone de frettage **62B** est située au voisinage de la deuxième extrémité **58** de la douille **42,** comprenant l'épaulement de douille **50,** dont la courbure rigidifie la douille **42** dans cette région de la douille **42**.

Le mécanisme d'actionneur de frein **10** comprend également le coulisseau **92,** fretté dans la mortaise de blocage **64,** en saillie radiale vers le cylindre de guidage **84** à travers la fente de blocage **66,** par rapport à la face extérieure de la douille **42**.

Lorsque le piston **12** du mécanisme d'actionneur de frein **10** est assemblé, l'écrou **16** est inséré en force dans la douille **42** sans risque d'accrocs grâce aux divers chanfreins qu'il comprend. L'insertion se fait dans le sens axial d'assemblage **210,** jusqu'à ce que la face annulaire d'extrémité **36** de l'écrou **16** bute contre l'épaulement de douille **50**. La douille **42,** par l'intermédiaire des deux zones de frettage **62**, est frettée sur l'écrou **16,** au niveau des deux portées annulaires de frettage **52,** ce qui permet de constituer un ensemble monobloc composé de l'écrou **16** et de la douille **42,** à savoir le piston **12.** La première zone de frettage **62A** est frettée sur la première portée annulaire de frettage **52A,** la deuxième zone de frettage **62B** est frettée sur la deuxième portée annulaire de frettage **52B,** et la zone de guidage **44** est située en regard sans contact de la paroi périphérique extérieure **32** de l'écrou **16** dû au renfoncement annulaire **46.** La paroi périphérique extérieure **32** de l'écrou **16** ainsi que la face intérieure cylindrique **48,** du fait du renfoncement annulaire **46,** sont alors espacées par un espace annulaire intermédiaire **56.**

L'espace annulaire intermédiaire **56** présente les dimensions du renfoncement annulaire **46** telle que sa longueur ou sa profondeur. L'espace annulaire intermédiaire **56** permet de pallier aux déformations de la douille **42** lors de son frettage à l'écrou, et/ou de l'écrou **16** lors d'une éventuelle augmentation du volume de l'écrou **16** engendrée par des variations de température lorsque le piston **12** est en phase de fonctionnement dans son environnement de fonctionnement. Ainsi, le diamètre de la douille **42,** et plus précisément le diamètre extérieur de la zone de guidage **44,** à savoir la face extérieure de la douille **49,** est maintenu à une valeur relativement constante, de sorte à préserver les propriétés voulues lors de la production du mécanisme d'actionneur de frein **10.**

Le montage est effectué avec une indexation angulaire de sorte que :

- la mortaise de blocage **64** de l'écrou **16** et la fente de blocage **66** de la douille **42** sont situées l'une en face de l'autre, et que la fente de blocage **66** permette d'accéder à la mortaise de blocage **64 ;** et

- la mortaise de sertissage **63** de l'écrou **16** et le rabat de matière de sertissage **76** de la douille **42** sont réalisés l'un en face de l'autre.

Le rabat de matière de sertissage **76,** orienté initialement parallèlement à l'axe de référence **100,** est ensuite rabattu radialement vers l'intérieur dans la mortaise de sertissage **63** de sorte à solidariser la douille **42** et l'écrou **16.** Le coulisseau **92** est ensuite inséré dans la mortaise de blocage **64** de l'écrou **16** à travers la fente de blocage **66.** Lorsque la mortaise de sertissage **63** est confondue avec la mortaise de blocage **64,** le coulisseau **92** peut entrer en contact avec le rabat de matière de sertissage **76** permettant une solidarisation supplémentaire entre la douille **42** et l'écrou **16.**

La vis **14** est ensuite insérée dans l'écrou **16** du piston **12,** par un mouvement hélicoïdal progressif.

Le sous-ensemble constitué de la vis **14** et du piston **12** équipé du coulisseau **92** est ensuite inséré dans le cylindre de guidage **84** dans le sens axial d'assemblage **210.** Pour ce faire, la fente de blocage **66** de la douille **42** et la mortaise de blocage **64** de l'écrou **16** doivent être insérées dans la cannelure de blocage **88** du corps de guidage **86** du cylindre de guidage **84,** tandis que le coulisseau **92** pénètre dans la cannelure de blocage **88.** La zone de guidage **44** de la face extérieure de la douille **42** entre alors en contact glissant de translation sans rotation avec la paroi de guidage intérieure du corps de guidage **86.**

Le coulisseau **92** inséré dans la cannelure de blocage **88** ne possède qu'un degré de liberté, aux jeux fonctionnels près, en translation parallèlement à l'axe de référence **100** dans la cannelure de blocage **88.** Le coulisseau **92** bloque alors le piston **12** en rotation autour de l'axe de référence **100,** tout en lui laissant un degré de liberté de translation parallèlement à l'axe de référence **100.**

En fonctionnement, un mouvement de rotation de la vis **14** autour de l'axe de référence **100,** entraînée en rotation au niveau de la tête de vis **20** par un moteur, génère un mouvement de translation du piston **12** dans un sens qui est fonction du sens de rotation de la vis **14.**

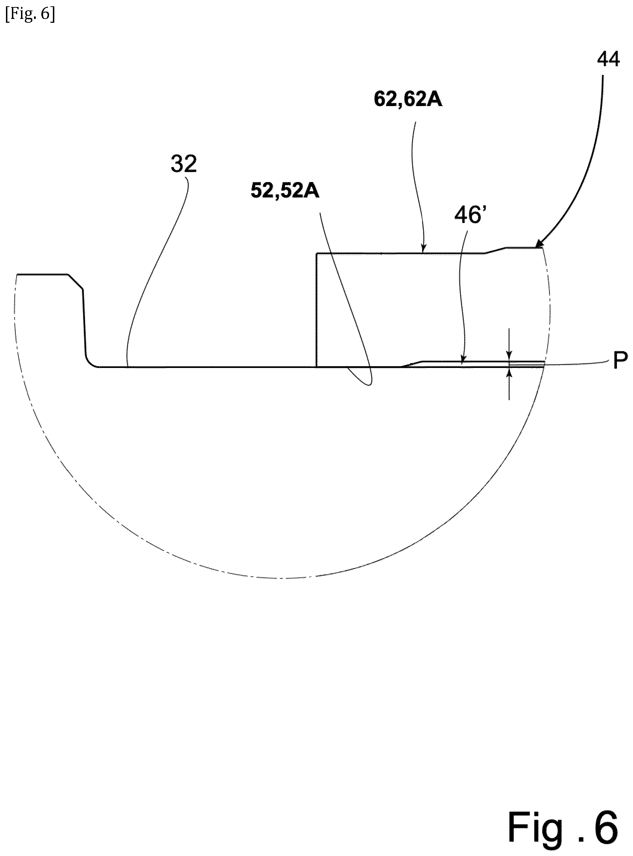

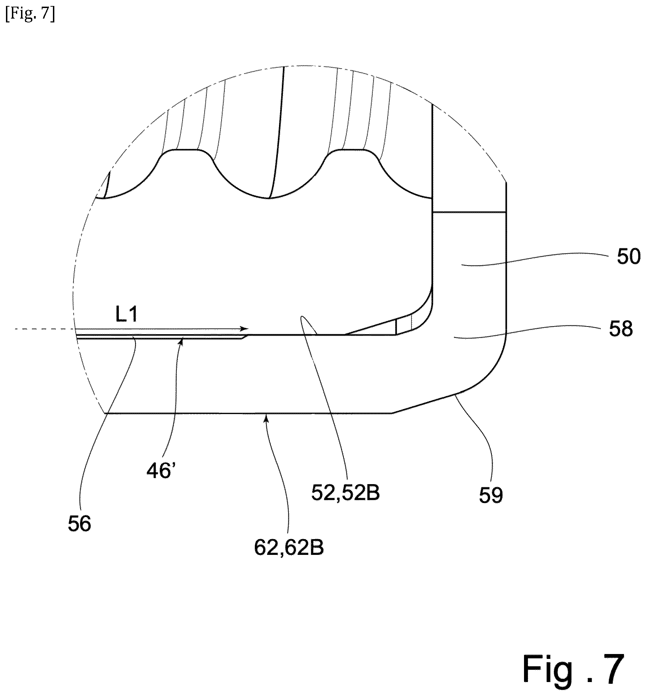

Selon un deuxième mode de réalisation, illustré sur les figures 6 et 7, le mécanisme d'actionneur de frein **10** diffère de celui décrit dans le premier mode de réalisation en ce que le mécanisme d'actionneur de frein **10** ne présente pas de renfoncement annulaire **46** de l'écrou **16.** En outre, la douille présente un renfoncement annulaire secondaire **46'** radialement vers l'extérieur, au niveau de la face intérieure cylindrique **48.** L'espace annulaire intermédiaire **56** est alors généré par le renfoncement annulaire secondaire **46',** présentant les mêmes caractéristiques avantageuses que lorsqu'il est généré par le renfoncement annulaire **46** de l'écrou **16.**

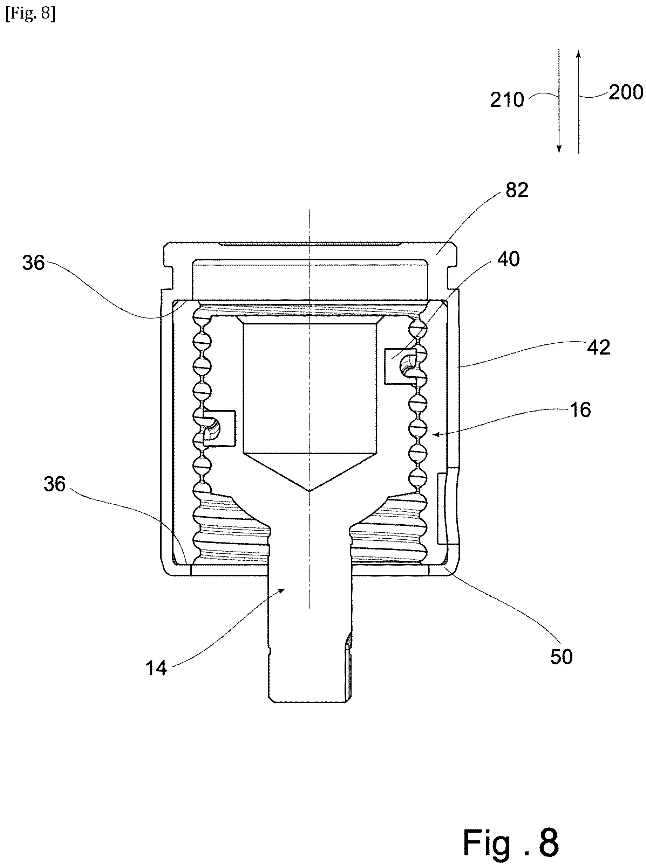

Selon un troisième mode de réalisation, illustré sur la figure 8, le mécanisme d'actionneur de frein **10** diffère de celui décrit dans les deux premiers modes de réalisation en ce que l'écrou **16** ne comprend pas de fond d'écrou **17.** L'écrou **16** comprend alors deux faces annulaires d'extrémité **36** de l'écrou **16.** Le piston comprend alors un fond de piston réalisé par la douille **42,** et plus particulièrement par un fond de douille **82.** L'écrou est alors inséré dans la douille **42** dans un second sens axial d'assemblage **200,** de sens opposé au sens axial d'assemblage **210** mais de même direction. L'épaulement **50** de la douille **42,** en saillie axiale par rapport à la face annulaire d'extrémité **36** de l'écrou **16** opposée au fond de douille **82,** si présent, est alors réalisé par rabattement de matière après assemblage de la douille **42** sur l'écrou **16.** Cet épaulement **50** est toutefois optionnel.

Dans tous les modes de réalisation décrits ci-dessus, la douille **42** peut subir, avant son assemblage sur l'écrou **16,** un traitement thermochimique afin de résister à l'abrasion et à la corrosion à une température Ts jusqu'à obtention d'une couche de surface de résistance à l'abrasion et à la corrosion riche en azote. Le traitement afin d'obtenir une pareille couche inclut une nitruration ou une nitrocarburation, la température Ts étant comprise entre 300°C et 580°C. La nitruration et/ou la nitrocarburation permettent au nitrure de se former en surface quand on place une pièce dans une atmosphère de traitement très riche en azote à la température Ts, permettant la formation d'un matériau différent en surface. Grâce à ce traitement, la face extérieure **49** de la douille **42** du piston **12** résiste à l'abrasion et à la corrosion qui pourraient survenir dans les conditions d'utilisation, lorsque le piston **12** coulisse en translation dans le cylindre de guidage **84**. La nitrocarburation ne modifiant pas la planéité d'une surface, il est donc possible de rectifier la face extérieure **49** de la douille **42** avant l'application du traitement thermochimique.

De même, l'écrou **16** peut être soumis à un traitement thermochimique de durcissement incluant une chauffe à une température Tc supérieure d'au moins 200°C à Ts, de préférence supérieure au moins à 900°C. Le traitement thermochimique de durcissement, par exemple du type cémentation de surface ou à cœur, inclut ensuite une trempe et un revenu à une température Tr inférieure d'au moins 100°C à Ts, de préférence inférieure à 200°C. Ce traitement permet l'obtention d'une couche superficielle durcie, riche en carbone au moins localement au niveau du filet d'écrou **27** de la surface intérieure de l'écrou **16**. Grâce à ce traitement, le filet d'écrou **27** a une dureté accrue en surface et en profondeur, ce qui lui permet d'être plus durable en résistant à l'écaillage par exemple. La cémentation modifie cependant la planéité d'une surface d'une pièce, il est donc nécessaire de procéder à une étape de rectification, tournage dur ou fraisage dur sur la surface intérieure de l'écrou **16** après l'application du traitement thermochimique.

En outre, la partie en contact avec la plaquette de frein, autrement dit le fond du piston, constitué par la face de fermeture extérieure **34** ou le fond de douille **82,** peut subir l'application d'un revêtement de surface supplémentaire. Ce traitement supplémentaire est par exemple une application de zinc lamellaire en surface ou autre procédé de traitement de surface. Ce traitement supplémentaire permet de rendre la face de fermeture extérieure **34** ou le fond de douille **82** plus résistant à la corrosion lors de l'actionnement du mécanisme d'actionneur de frein **10**. Alternativement, dans le mode de réalisation des figures 1 à 4, le traitement de cémentation de l'écrou peut conférer à la face de fermeture extérieure **34** une résistance à la corrosion suffisante.

Naturellement, les exemples représentés sur les figures et discutés ci-dessus ne sont donnés qu'à titre illustratif et non limitatif. Il est explicitement prévu que l'on puisse combiner entre eux les différents modes de réalisation illustrés pour en proposer d'autres.

Suivant une autre variante non illustrée, les moyens de recirculation **40** sont constitués au niveau de l'écrou **16** qui présente un canal de recirculation externe et des recirculateurs, permettant la recirculation externe des billes, c'est-à-dire dans l'épaisseur de l'écrou **16**. Le canal de recirculation peut être ouvert, et refermé lors de l'assemblage du mécanisme d'actionneur de frein **10** par la face intérieure cylindrique **48** de la douille **42.**

Suivant une autre variante non illustrée, le mécanisme d'actionneur de frein **10** peut présenter un soufflet annulaire, comprenant une base annulaire configurée pour s'insérer dans un chambrage annulaire du cylindre de guidage **84,** et une tête de soufflet configurée pour être pincée entre l'épaulement de collerette **72'** de la collerette **72,** et la douille **42,** radialement en appui sur la paroi périphérique extérieure 32 ou bien dans une gorge annulaire réalisée sur la douille à fond plein du mode de réalisation illustré en figure 8. Ce soufflet annulaire permet d'éviter les intrusions de polluants à l'intérieur du cylindre de guidage **84** en réalisant une étanchéité primaire.

Suivant une autre variante non illustrée, l'écrou **16** ne comprend qu'une seule portée annulaire **52** et la douille **42** ne comprend qu'une seule zone de frettage **62**.

Suivant une autre variante non illustrée, le mécanisme d'actionneur de frein **10** présente le renfoncement annulaire **46** de l'écrou **16** et le renfoncement annulaire secondaire **46'** de la douille **42**. L'espace annulaire intermédiaire **56** est alors généré par le renfoncement annulaire **46** et le renfoncement annulaire secondaire **46'.**

**Revendications**

1. Piston (12) d'un mécanisme d'actionneur, le piston (12) comportant

   - un écrou (16) de mécanisme de vis sans fin, définissant un axe de référence (100), une paroi périphérique extérieure (32) et un filet d'écrou (27) destiné à coopérer, directement ou par l'intermédiaire de billes, avec une vis de mécanisme de vis sans fin ;
   - une douille (42) solidaire de l'écrou (16) et recouvrant au moins partiellement la paroi périphérique extérieure (32) de l'écrou (16), la douille (42) comprenant une zone de guidage (44) cylindrique destinée à venir en contact glissant ajusté avec une paroi de guidage intérieure d'un cylindre de guidage (84) du mécanisme d'actionneur (10) ;

   **caractérisé en ce que** l'écrou (16) comprend au moins une portée annulaire de frettage (52), la douille (42) comprend au moins une zone de frettage (62) frettée sur la portée annulaire de frettage (52), la zone de guidage (44) présentant un diamètre extérieur supérieur à celui de la zone de frettage (62) et recouvrant sans contact ou sans frettage une portion recouverte (80) de la paroi périphérique extérieure (32) de l'écrou (16).

2. Piston (12) selon la revendication 1, **caractérisé en ce que** la zone de guidage (44) et la portion recouverte (80) de la paroi périphérique extérieure (32) de l'écrou (16) sont séparées par un espace annulaire intermédiaire (56) généré par :

- un renfoncement annulaire (46) de la portion recouverte (80) de la paroi périphérique extérieure (32) de l'écrou (16) par rapport à la portée annulaire de frettage (52) ; et /ou
- un diamètre intérieur de la zone de guidage (44) supérieur à un diamètre intérieur la zone de frettage (62).

3. Piston (12) selon la revendication 2, **caractérisé en ce que** l'espace annulaire intermédiaire (56) présente une longueur L1 mesurée parallèlement à l'axe de référence (100), et une profondeur P, mesurée radialement entre la paroi périphérique extérieure (32) de l'écrou (16) et une face intérieure cylindrique (48) de la zone de guidage (44) de la douille (42), et l'écrou (16) présente une longueur d'écrou L2 mesurée dans un axe parallèle à l'axe de référence (100) entre deux extrémités de l'écrou (16), telles que

-

$$L1 > 20P\;;$$

et/ou

-

$$\frac{L2}{2} < L1 < L2.$$

4. Piston (12) selon l'une quelconque des revendications précédentes, **caractérisé en ce que** l'écrou comprend une deuxième portée annulaire de frettage (52), et la douille (42) comprend une deuxième zone de frettage (62) en contact avec la deuxième portée annulaire de frettage (52) de l'écrou (16).

5. Piston (12) selon la revendication 4, **caractérisé en ce que** les deux zones annulaires de frettage (62) sont situées à deux extrémités axiales opposées de la zone de guidage (44).

6. Piston (12) selon l'une quelconque des revendications précédentes, **caractérisé en ce que** la douille (42) présente un épaulement (50) de fin de course de frettage tourné dans un sens axial d'assemblage (210), en appui contre une face annulaire d'extrémité (36) de l'écrou (16).

7. Piston (12) selon l'une quelconque des revendications précédentes, **caractérisé en ce que** l'écrou (16) comprend une mortaise de sertissage (63) et la douille (42) présente un rabat de matière de sertissage (76) pénétrant dans la mortaise de sertissage (63) en appui contre un épaulement de sertissage (74) de la mortaise de sertissage (63).

8. Piston (12) selon l'une quelconque des revendications précédentes, **caractérisé en ce que** l'écrou (16) comprend une mortaise de blocage (64) et la douille (42) présente une fente de blocage (66) ouverte sur la mortaise de blocage (64), le piston comportant en outre un coulisseau (92) inséré dans la mortaise de blocage (64) et en saillie radiale par rapport à la zone de guidage (44).

9. Piston (12) selon l'une quelconque des revendications précédentes, **caractérisé en ce que** la douille (42) comprend une couche de surface de résistance à l'abrasion et à la corrosion riche en azote, et l'écrou (16) comprend une zone de surface durcie riche en carbone au moins localement au niveau du filet d'écrou (27).

10. Piston (12) selon l'une quelconque des revendications précédentes, **caractérisé en ce qu'**il présente un fond de piston.

11. Mécanisme d'actionneur de frein (10), comportant :

- un cylindre de guidage (84) ;
- un mécanisme de vis à billes, comportant une vis (14) et un écrou (16) définissant un axe de référence (100) du mécanisme d'actionneur de frein (10), coaxial avec le cylindre de guidage, et des billes, la vis (14) présentant au moins un filet de vis (25) formant un chemin de roulement pour les billes, l'écrou (16) présentant un filet d'écrou (27) formant un chemin de roulement hélicoïdal extérieur (30) pour les billes et une paroi périphérique extérieure (32) ; et
- une douille (42) solidaire de l'écrou (16) et recouvrant au moins partiellement la paroi périphérique extérieure (32) de l'écrou (16), la douille (42) venant en contact glissant ajusté avec une paroi de guidage intérieure du cylindre de guidage (84) ;

**caractérisé en ce que** la douille (42) et l'écrou (16) constituent un piston (12) selon l'une quelconque des revendications précédentes.

**Patentansprüche**

1. Kolben (12) eines Aktuatormechanismus, der Kolben (12) umfassend

- eine Mutter (16) eines Schneckengetriebes, die eine Bezugsachse (100), eine äußere Umfangswand (32) und ein Muttergewinde (27) definiert, das dazu bestimmt ist, direkt oder über Kugeln mit einer Schraube des Schneckengetriebes zusammenzuwirken;

- eine Buchse (42), die an der Mutter (16) befestigt ist und mindestens teilweise die äußere Umfangswand (32) der Mutter (16) bedeckt, wobei die Buchse (42) eine zylindrische Führungszone (44) umfasst, die dazu bestimmt ist, in engen Gleitkontakt mit einer inneren Führungswand eines Führungszylinders (84) des Aktuatormechanismus (10) zu kommen;

**dadurch gekennzeichnet, dass** die Mutter (16) mindestens eine ringförmige Schrumpffläche (52) aufweist, die Buchse (42) mindestens eine Schrumpfpassungszone (62) aufweist, die auf die ringförmige Schrumpffläche (52) aufgeschrumpft ist, wobei die Führungszone (44) einen Außendurchmesser aufweist, der größer ist als der der Schrumpfpassungszone (62), und einen abgedeckten Abschnitt (80) der äußeren Umfangswand (32) der Mutter (16) berührungslos und ohne Schrumpfpassung überlappt.

2.  Kolben (12) nach Anspruch 1, **dadurch gekennzeichnet, dass** die Führungszone (44) und der abgedeckte Abschnitt (80) der äußeren Umfangswand (32) der Mutter (16) durch einen ringförmigen Zwischenraum (56) getrennt sind, der erzeugt wird durch:

- eine ringförmige Vertiefung (46) in dem abgedeckten Abschnitt (80) der äußeren Umfangswand (32) der Mutter (16) relativ zu der ringförmigen Schrumpffläche (52); und/oder
- ein Innendurchmesser der Führungszone (44) größer ist als ein Innendurchmesser der Schrumpfzone (62).

3.  Kolben (12) nach Anspruch 2, **dadurch gekennzeichnet, dass** der ringförmige Zwischenraum (56) eine parallel zur Bezugsachse (100) gemessene Länge L1 und eine Tiefe P aufweist, die radial zwischen der äußeren Umfangswand (32) der Mutter (16) und einer zylindrischen Innenfläche (48) der Buchsenführungszone (44) der Buchse (42) gemessen wird, und die Mutter (16) eine entlang einer zur Bezugsachse (100) parallelen Achse gemessene Mutterlänge L2 zwischen zwei Enden der Mutter (16) aufweist, sodass

-

$$L1 > 20P;$$

und/oder

-

$$\frac{L2}{2} < L1 < L2.$$

4.  Kolben (12) nach einem der vorstehenden Ansprüche, **dadurch gekennzeichnet, dass** die Mutter eine zweite ringförmige Schrumpffläche (52) umfasst und die Buchse (42) eine zweite Schrumpfzone (62) in Kontakt mit der zweiten ringförmigen Schrumpffläche (52) der Mutter (16) umfasst.

5.  Kolben (12) nach Anspruch 4, **dadurch gekennzeichnet, dass** sich die beiden ringförmigen Schrumpfpassungszonen (62) an zwei gegenüberliegenden axialen Enden der Führungszone (44) befinden.

6.  Kolben (12) nach einem der vorstehenden Ansprüche, **dadurch gekennzeichnet, dass** die Buchse (42) eine in axialer Montagerichtung (210) gedrehte Schrumpfschulter (50) aufweist, die an einer ringförmigen Endfläche (36) der Mutter (16) anliegt.

7.  Kolben (12) nach einem der vorstehenden Ansprüche, **dadurch gekennzeichnet, dass** die Mutter (16) einen Quetschzapfen (63) aufweist und die Buchse (42) einen Lappen aus Quetschmaterial (76) aufweist, der den Quetschzapfen (63) durchdringt und an einer Quetschschulter (74) des Quetschzapfens (63) anliegt.

8.  Kolben (12) nach einem der vorstehenden Ansprüche, **dadurch gekennzeichnet, dass** die Mutter (16) einen Verriegelungszapfen (64) umfasst und die Buchse (42) einen Verriegelungsschlitz (66) aufweist, der in den Verriegelungszapfen (64) mündet, wobei der Kolben ferner einen in den Verriegelungszapfen (64) eingesetzten und in Bezug auf die Führungszone (44) radial vorstehenden Gleitschuh (92) aufweist.

9.  Kolben (12) nach einem der vorstehenden Ansprüche, **dadurch gekennzeichnet, dass** die Buchse (42) eine stickstoffreiche abrieb- und korrosionsbeständige Oberflächenschicht umfasst, und die Mutter (16) mindestens lokal am Muttergewinde (27) eine kohlenstoffreiche gehärtete Oberflächenzone umfasst.

10. Kolben (12) nach einem der vorstehenden Ansprüche, **dadurch gekennzeichnet, dass** der Kolben einen Kolbenboden aufweist.

**11.** Bremsaktuatormechanismus (10), umfassend:

- einen Führungszylinder (84);
- einen Kugelgewindemechanismus, umfassend eine Schraube (14) und eine Mutter (16), die eine zum Führungszylinder koaxiale Bezugsachse (100) des Bremsaktuatormechanismus (10) definieren, und Kugeln, wobei die Schraube (14) mindestens ein Schraubengewinde (25) aufweist, das eine Laufbahn für die Kugeln bildet, und die Mutter (16) ein Muttergewinde (27) aufweist, das eine äußere spiralförmige Laufbahn (30) für die Kugeln und eine äußere Umfangswand (32) bildet; und
- eine Buchse (42), die an der Mutter (16) befestigt ist und mindestens teilweise die äußere Umfangswand (32) der Mutter (16) bedeckt, wobei die Buchse (42) in engen Gleitkontakt mit einer inneren Führungswand des Führungszylinders (84) kommt;

**dadurch gekennzeichnet, dass** die Buchse (42) und die Mutter (16) einen Kolben (12) nach einem der vorstehenden Ansprüche bilden.

**Claims**

**1.** A piston (12) of an actuator mechanism, the piston (12) comprising

- a nut (16) of a worm gear mechanism, defining a reference axis (100), an outer peripheral wall (32) and a nut thread (27) intended to cooperate, directly or via balls, with a screw of the worm gear mechanism;
- a bushing (42) secured to the nut (16) and at least partially covering the outer peripheral wall (32) of the nut (16), the bushing (42) comprising a cylindrical guide zone (44) intended to come into close sliding contact with an inner guide wall of a guide cylinder (84) of the actuator mechanism (10);

**characterized in that** the nut (16) comprises at least one annular shrink-fit bearing surface (52), the bushing (42) comprises at least one shrink-fit zone (62) shrink-fitted onto the annular shrink-fit bearing surface (52), the guide zone (44) having an outer diameter greater than that of the shrink-fit zone (62) and overlapping, without contact or shrink-fitting, a covered portion (80) of the outer peripheral wall (32) of the nut (16).

**2.** The piston (12) according to claim 1, **characterized in that** the guide zone (44) and the covered portion (80) of the outer peripheral wall (32) of the nut (16) are separated by an intermediate annular space (56) generated by:

- an annular recess (46) in the covered portion (80) of the outer peripheral wall (32) of the nut (16) relative to the annular shrink-fit bearing surface (52); and/or
- an inner diameter of the guide zone (44) greater than an inner diameter of the shrink-fit zone (62).

**3.** The piston (12) according to claim 2, **characterized in that** the intermediate annular space (56) has a length L1 measured parallel to the reference axis (100), and a depth P, measured radially between the outer peripheral wall (32) of the nut (16) and a cylindrical inner face (48) of the bushing guide zone (44) of the bushing (42), and the nut (16) has a nut length L2 measured along an axis parallel to the reference axis (100) between two ends of the nut (16), such that

-

$$L1 > 20P;$$

and/or

-

$$\frac{L2}{2} < L1 < L2.$$

**4.** The piston (12) according to any of the preceding claims, **characterized in that** the nut comprises a second annular shrink-fit bearing surface (52), and the bushing (42) comprises a second shrink-fit zone (62) in contact with the second annular shrink-fit bearing surface (52) of the nut (16).

**5.** The piston (12) according to claim 4, **characterized in that** the two annular shrink-fit zones (62) are located at two opposite axial ends of the guide zone (44).

**6.** The piston (12) according to any of the preceding claims, **characterized in that** the bushing (42) has a shrink-fit end-of-stroke shoulder (50) turned in an axial assembly direction (210), bearing against an annular end face (36) of the nut (16).

**7.** The piston (12) according to any of the preceding claims, **characterized in that** the nut (16) comprises a crimping mortise (63) and the bushing (42) has a flap of crimping material (76) penetrating the crimping mortise (63) and bearing against a crimping shoulder (74) of the crimping mortise (63).

**8.** The piston (12) according to any of the preceding claims, **characterized in that** the nut (16) comprises a locking mortise (64) and the bushing (42) has a locking slot (66) open onto the locking mortise (64), the piston further comprising a slipper (92) inserted into the locking mortise (64) and projecting radially with respect to the guide zone (44).

9.  The piston (12) according to any of the preceding claims, **characterized in that** the bushing (42) comprises a nitrogen-rich abrasion- and corrosion-resistant surface layer, and the nut (16) comprises a carbonrich hardened surface zone at least locally at the nut thread (27).

10. The piston (12) according to any of the preceding claims, **characterized in that** the piston has a piston crown.

11. A brake actuator mechanism (10), comprising:

    - a guide cylinder (84);
    - a ball screw mechanism, comprising a screw (14) and a nut (16) defining a reference axis (100) of the brake actuator mechanism (10), coaxial with the guide cylinder, and balls, the screw (14) having at least one screw thread (25) forming a raceway for the balls, the nut (16) having a nut thread (27) forming an outer helical raceway (30) for the balls and an outer peripheral wall (32); and
    - a bushing (42) secured to the nut (16) and at least partially covering the outer peripheral wall (32) of the nut (16), the bushing (42) coming into close sliding contact with an inner guide wall of the guide cylinder (84);

    **characterized in that** the bushing (42) and the nut (16) constitute a piston (12) according to any one of the preceding claims.

[Fig. 1]

Fig.1

[Fig. 2]

Fig.2

[Fig. 3]

Fig.3

[Fig. 4]

Fig .4

[Fig. 5]

Fig .5

[Fig. 6]

Fig . 6

[Fig. 7]

Fig . 7

[Fig. 8]

Fig . 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2402914
- EP 2787248 B1

- FR 2753672 A1